(19) Europäisches Patentamt

European Patent Office

Office européen des brevets

(11) **EP 1 492 249 A1**

(12) **EUROPEAN PATENT APPLICATION**

(43) Date of publication:
**29.12.2004 Bulletin 2004/53**

(51) Int Cl.7: **H04B 7/005**, H04Q 7/22

(21) Application number: **03425411.0**

(22) Date of filing: **25.06.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK**<br><br>(71) Applicant: **Siemens Mobile Communications S.p.A.**<br>**20126 Milano (IT)** | (72) Inventor: **D'Onofrio, Giovanni**<br>**20129 Milano (IT)**<br><br>(74) Representative: **Giustini, Delio**<br>**Siemens Mobile Communications S.p.A,**<br>**Palazzo Gorky**<br>**Via Monfalcone, 1**<br>**20092 Cinisello Balsamo (IT)** |

(54) **Downlink power control method for multicast service in mobile radio networks**

(57) Valuable multicast services like: newspapers, breaking news, TV news, weather forecast, economic news, sports news, last sports scores, etc., are currently down-streamed in the relevant UMTS/GSM service areas. Limiting to a most unfavourable subset the multicast users enabled to report their measured SIRs ($SIR_{mobile}$) to the base station. A discrimination parameter $X \geq 1$ and a SIR threshold ($SIR_{THR}$) are paged for this purpose. Each user checks a twofold condition set by the two parameters for autonomously decide whether or not reporting. At the end, a subset only of the users whose $SIRs_{mobile}$ are lower than $SIR_{THR}$ establish dedicated signalling connections with the network for SIR reporting. The base station counts the received $SIRs_{mobile}$ and compares the counting with a fixed number of reporting users, in order to decide between p-t-m and p-t-p transmissions. Two procedures are possible both using two reporting thresholds $D_{THR1}$ and $D_{THR2}$. Before data transmission $D_{THR1} = D_{THR2}$ is assumed; during data transmission $D_{THR1} < D_{THR2}$ is taken to avoid bouncing; e.g.: $D_{THR1} = 4$ and $D_{THR2} = 8$ seem reasonable.

**POWER CONTROL MESSAGE SEQUENCE CHART**

**FIG. 3a**

**UE**         **UTRAN**         **CN**

Possible iterative procedure
going back to step **4.**

**8.** UTRAN counts the
number of responses
and decides whether
to set up a ptm or ptp
transmission

**9.** Request for Dedicated RRC connections
only for the responding UEs

**10.** RRC connections (DCH/DCH establishment) for
closed loop power control for the responding UEs only

## FIG. 3b

**UE**         **UTRAN**         **CN**

**11.** UTRAN sets up the
transmission power for the
MBMS service delivery

**12.** MBMS data transmission on common/dedicated channel/s if the
ptm/ptp option is set up

**13.** Step 5 (for MBMS data) and steps 11, 12 are repeated
cyclically for closed loop power control, checking suitable
conditions for refreshing the subset of reporting UEs

**14.** In case of refresh, goes to step **4.**
confirming/modifying parameters X
and/or $SIR_{THR}$ and repeats the cycle.

## FIG. 3c

## Description

### FIELD OF THE INVENTION

The present invention relates to the field of valuable service delivering in a mobile radio network, and more precisely to a downlink power control method for multicast service delivery in a mobile radio network. Multicast services like newspapers, breaking news, TV news, weather forecast, economic news, sports news, last sports scores, etc., are going to be provided in relevant service areas in the next future.

### BACKGROUND ART

The following is a list of considered prior art documents in the field of the present invention:

[1] EP1143635 A1 patent application titled: "Multicast signal transmission power control method and base station using the same"; Applicant: NTT DoCoMo, Inc.
[2] "POWER CONTROL FOR SOFTWARE DOWNLOAD USING COMMON CHANNELS IN WCDMA"; authors: Eiman Mohyeldin, Roger Abou-Jaoude, Markus Dillinger and Jijun Luo (Siemens AG); "Software Defined Radio (SDR) Technical Conference and Product Exposition; 11, 12 November 2002 - San Diego, Califonia.
[3] 3GPP (3rd Generation Partnership Project) TS 22.146: "Multimedia Broadcast / Multicast Service; Stage 1".
[4] 3GPP TS 25.346 (Release 6): "Introduction of the Multimedia Broadcast Multicast Service (MBMS) in the Radio Access Network".
[5] 3GPP TR 23.846 (Release 6): "Multimedia Broadcast Multicast Service; Architecture and Functional Description".
[6] 3GPP TR 25.992: "Multimedia Broadcast Multicast Service (MBMS); UTRAN/GERAN Requirements".
[7] "Digital Communications", John G. Proakis, Fourth Edition, McGraw-Hill Series in Electrical and Computer Engineering.

According to the protocols described in the above 3GPP documents, the MBMS paradigm is based on the possibility to convey the same multimedia contents to a number of users at the same time with the same data flow in order to decrease the consumption of radio and network resources and reduce the interferences. By means of the MBMS technique, multimedia contents are transferred in the downlink direction only: from the network to the mobile stations, also named UE (User Equipment) in the following. Considering that different Quality of Service (QoS) classes are defined by 3GPP (e.g.: TS 23.107), namely: Conversational, Streaming, Interactive and Background, the only ones that are applicable to the MBMS service are Streaming and Background. For the sake of completeness, an MBMS session is a continuous and time-bounded reception of a broadcast/multicast service by the UE. A single broadcast/multicast service can only have one broadcast/multicast session at any time. A broadcast/multicast service may consist of multiple successive broadcast/multicast sessions.
With reference to the 3GPP specifications, the network announces the availability of a MBMS service to the potential users camped in the service area. While the broadcast service may be received by all users who have enabled the specific service, the multicast service can only be received by those users which are subscribed to the specific multicast service and have joined the multicast group associated with the specific service. In case of multicasting, the subscribers of the announced service that want to receive it, shall transmit to the network a request to join the multicast group for that service. Individual connections through the RRC (Radio Resource Control) protocol layer are set up to transmit the joining requests. In reply, the network pages the joined users sending a notification message about the availability of the specific MBMS content in a given cell. The notification message gives to the joined users useful information of how get the announced service, i.e.: Service-Id, RB parameters, etc. The content of the announced service is then transmitted towards the joined users on a point-to-multipoint (p-t-m) channel previously set-up in the cells of the service area. Nevertheless, if the number of joined users in the cell is less than a threshold fixed by the network operator, the transmission on common channel is not anymore convenient and the multicast content can be delivered point-to-point. In order to decide between the two transmission mode p-t-m or p-t-p a counting procedure in each cell of the service area is foreseen in the relevant specifications. Counting is performed when the radio access network needs to identify the number of multicast subscribers that want to receive a multicast session for a particular service. The counting take into account all joined subscribers, or just above said fixed "threshold" (e.g.: 8 users).
If there is not power control, the power of the MBMS common channel is set up to the value needed to cover the whole cell.. This can cause a waste of power and the increase of the interference level perceived by other users. A first solution of these drawbacks has been proposed in the European patent application mentioned at Ref.[1]. According to Ref.[1], the transmission power of the multicast signal is reduced to a threshold value compatible with the QoS required by the mobile stations which receive the multicast signal. Each involved mobile station measures a quality parameter of the multicast received signal and reports the measurement to the base station. The base station, on the basis of all the reported measurements, determines an optimal power level for transmitting the multicast signal towards the joined users. A first drawback of this method is that the BER (Bit Error Rate) perceived by the mobile stations is unacceptably high in case all users are taken into account for reporting the QoS measures. The drawback is due to the fact that the users closer to the base station mask the far users that will be complaining about low QoS. In addition to the above near-far problem, the uplink resources are also heavily used and considerable interfered. Furthermore, the opportunity to switch from p-t-m to p-t-p in case the number of the MBMS users is lower than a given threshold is not considered at all.

The article of Ref.[2], published by the same Applicant of the present invention, discloses a power control method for push type services in W-CDMA (Wideband Code Division Multiple Access). The method is particularly devoted to software download for terminal reconfigurability delivered on new common channels created ad hoc. According to a first approach, the base station pages a fixed-size subgroup of users (the worst 20%) to ask them to report their QoS ($SIR_{actual}$) for the coming period of time. After each reporting time expires, the base station receives all SIR (Signal-to-Interference Ratio) of interest on dedicated service uplink channels (SUC) and, based on the mean value, makes the decision of whether to increase or decrease the transmitted power on the common channel. According to a second approach the base station pages a group of users to ask them to report their QoS for the coming period of time. Those users will be categorised as the reporting subgroup. However, since users are expected to be moving in the network, this subgroup needs to be refreshed after a certain time denoted as paging campaign. The adherence to the reporting subgroup for the upcoming period until the next paging campaign is made according to the following expression:

$$\frac{\sum t_i}{T_{polling}} \geq \beta$$

where $t_i$ is the cumulative amount of time when $SIR_{actual}$ is successively greater than $SIR_{target}$, $T_{polling}$ is the length of the polling campaign period, $\beta$ is a threshold defined according the quality of service required by the download group. If the condition given by the above formula is not fulfilled, the mobile decides to join the reporting subgroup and report its complain ($SIR_{actual}$) to the base station. The three variables: $SIR_{target}$, $T_{polling}$, and $\beta$ are download at the start of each new software download session.

Although the method of Ref.[2] contrary to the one of Ref.[1] turns down the downlink BER and reduces the interferences on uplink, still some drawbacks are pointed out. A drawback of the first approach is to use a fixed-size paging subgroup: the 20% worst, whose dimension has to be determined in advance, for example, collecting the SIR measures from all the multicast users and the successive sorting. A drawback of the second approach is that a mobile station can issue a decision to report or not its SIR only at the end of $T_{polling}$ period, lasting several frames.

It is important to underline that a common strategy to perform power control and counting together in order to decide between p-t-m and p-t-p transmission is unknown in the art. In fact, up to now the two procedures have been always considered separated: different in the times and purposes. The aim of power control is setting up the most suitable transmission power, while the aim of counting (or re-counting) is to decide the best transmission mode on the basis of the number of the multicast service users. The power control of the invention integrates counting in a new combination of steps where the counting operates in synergy for setting up an optimal downlink power level on a common channel. The synergy is extended to address power control towards dedicated channels when these are preferable. On the other hand the new power control can avail the mobile network avoiding a separate, expensive counting procedure. The new power control procedure is far from a mere juxtaposition of two procedure working separately.

**OBJECTS OF THE INVENTION**

The objects of the present invention is to overcome the drawbacks of the prior state of the art and define a multicast transmission power control method able to decide in parallel to the downlink power level whether to implement a point-to-multipoint transmission with a common channel or a point-to-point transmission with dedicated channels.

**SUMMARY AND ADVANTAGES OF THE INVENTION**

In accordance with the object of the invention a transmission power control method of multicast service transmitted in a mobile radio service area is claimed, as disclosed in the relevant method claims.

According to the invention, the multicast users are paged to notify the incoming service; only the users that fulfil a twofold condition are those ones that report their measured quality to the network (autonomously) on dedicated channels appositely set up. The network can choose between p-t-m and p-t-p estimating the number of user, then determines the most suitable transmission power on the basis of the received quality values. Because of saving power on the common channels is an ambitious target in MBMS transmissions, the twofold condition shall be correctly calibrated. In fact, too selective condition might excessively restrict the subset of the reporting users, and as an immediate consequence the downlink transmission power might be set up in non-optimal way. On the other hand, a less selective condition might unnecessarily increase the group of reporting users and reduce the benefit of the method, consequently.

Two thresholds are the elements of the twofold condition, namely: a statistical threshold and a quality threshold. The only SIR will be considered in the following as quality threshold ($SIR_{THR}$) but the derived conclusions can be extended to other quality parameters, such as BER. The statistical threshold is a parameter $X \geq 1$ transmitted by the base station to reduce the number of multicast users enabled to report their SIRs, to prevent jamming and to decrease interference. The parameter X is described in 3GPP TS 25.331, V5.2.0 section 14.8. The $SIR_{THR}$ is determined in a range of variability delimited by minimum SIR ($SIR_{MIN}$) and maximum SIR ($SIR_{MAX}$) selected by the network operator.

According to the method of the present invention, the sequential application of the parameters X and $SIR_{THR}$ allows the mobile stations to decide autonomously whether it is enabled or not to report its current SIR to the network. In particular, the first criterion allows to select a subset including a fraction 1/X of the MBMS users, the second criterion: $SIR_{mobile} \leq SIR_{THR}$ allows to select the users with the worst signal to interference ratio among the users belonging to the subset.. Only the mobile stations that fulfil the above two criteria establish a dedicated signalling connection. The decision of reporting the SIR depends on the mobile station, according to the previous condition, differently from the β-reporting approach of the prior art, Furthermore, before determining the transmission power, the number of reporting users is checked to verify whether is smaller than a fixed value (the reporting threshold) whose exceeding makes advantageous the provisioning of the service by a common channel, otherwise dedicated channels are set up. According to a preferred embodiment of the invention, the paging message is iterated for a time $T_{MAX}$ modifying the parameter X and/or $SIR_{THR}$ properly and checking at each iteration if the number of reporting users overcomes a fixed threshold (e.g. 8 users) as a condition to adopt point-to-multipoint transmission. The starting twofold condition is the most selective one. If the reporting threshold is exceeded, the paging message is stopped and the multicast signal is transmitted point-to-multipoint and the initial transmission power is set up accordingly. Otherwise the twofold condition is made less selective and another iteration is started. If a fixed time, $T_{MAX}$, elapses without exceeding the reporting threshold , the multicast signal is transmitted point-to-point on dedicated channels. According to an alternative embodiment of the invention the cumulative distribution $P(SIR_{mobile} < SIR_{THR})$ is assumed known. The two parameters X and $SIR_{THR}$ of the twofold condition are properly set and the probability to reply to the paging message is calculated accordingly. Starting from the probability to reply and counting the number of users that respond to the paging message, the effective number of multicast users can be estimated. The estimated number is compared with a fixed threshold (e.g. 8 users) to discriminate between p-t-p and p-t-m, and the transmission is set up accordingly. Due to its statistical nature, the second embodiment is effective if many multicast users are present in the cell. The advantage of the second approach is a quicker decision between p-t-m and p-t-p channels, but it needs to know in advance the statistical distribution of the SIR and the optimum value of the two parameters X and $SIR_{THR}$.

The base station, on the basis of the received SIRs, can determine the initial transmission power of the multicast service content with several options that will be described later on. A closed loop power control is most effective to save downlink power , that is the initial transmission power is updated at each timeslot thanks to the presence of dedicated connections. During all the service delivering time, the reporting group needs to be updated (refreshed) (e. g. each time one of the reporting users makes handover to another cell, or its SIR exceeds the $SIR_{THR}$). The refreshing implies the repetition of the paging, varying the parameter X and/or $SIR_{THR}$. A refreshing period $T_{REFRESH}$, depending on the mobility nature of the users inside the cell and the handover characteristics, is set for this purpose.

The method of the invention can be generalised to more multicast services simultaneously delivered on the same cell to respective multicast users. Without limitation, a user might belong to more multicast groups and receive the joined services in parallel. Because of the various services are independent to each other and might be transmitted with different power, the method of the invention runs independently for each multicast service, consequently.

In accordance with the objects of the invention, a mobile radio system able to implement the above disclosed power control method is claimed, as disclosed in relevant system claims.

## BRIEF DESCRIPTION OF THE DRAWINGS

The features of the present invention, which are considered to be novel, are set forth with particularity in the appended claims. The invention, together with further objects and advantages thereof, may be understood with reference to the following detailed description of an embodiment thereof taken in conjunction with the accompanying drawings given for purely non-limiting explanatory purposes and wherein:

- **fig.1** shows a partial UMTS (Universal Mobile Telecommunication System) network corresponding to a possible MBMS service area;
- **fig.2** shows a general block diagram of the UMTS system giving evidence to the MBMS architecture;
- **figures 3a, 3b,** and **3c** show a message sequence chart according to the power control method of the present invention;
- **fig.4** shows a simplified block diagram of the mobile station according to the present invention;
- **fig.5** shows a simplified block diagram of the base station according to the present invention.

**DETAILED DESCRIPTION OF SOME PREFERRED EMBODIMENTS OF THE INVENTION**

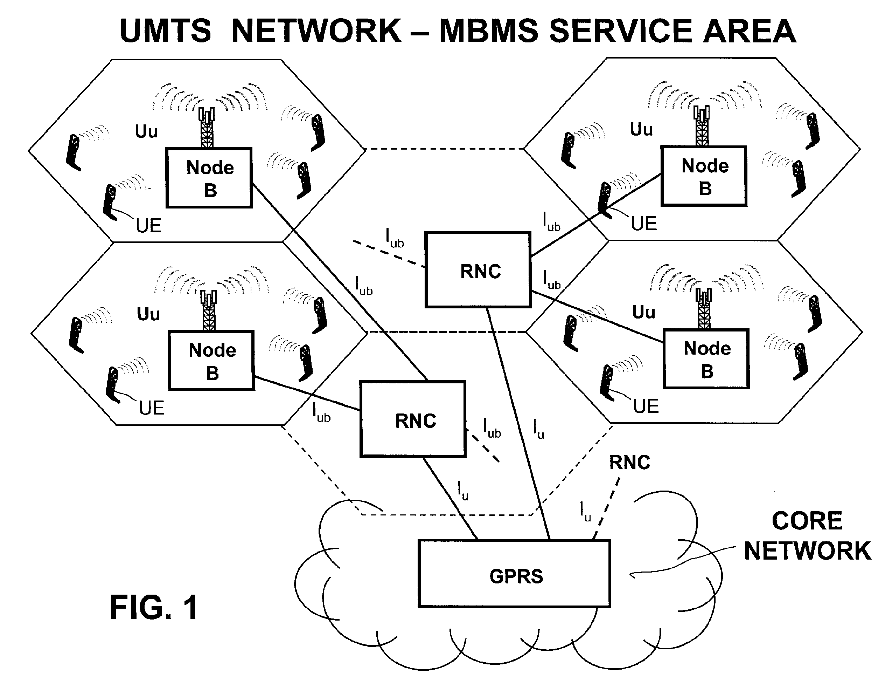

In **fig.1** a partial UMTS network constituted by a core network CN and a territory subdivided in service cells is depicted. The core network CN includes a block SGSN (Serving GPRS Support Node) physically connected to several blocks RNC (Radio Network Controller), each of them physically connected to a pool of controlled blocks named "Node B" that correspond to fixed Base Stations inside respective cells. Each Node B is connected via radio with a plurality of mobile stations, also termed User Equipment (UE). The following interfaces are defined: an Iu interface between the SGSN and the RNCs; an Iub interface between the RNC and the Node Bs; and an on-air Uu interface between the Node B and the User Equipment UE. The UMTS network is subdivided into contiguous service areas, each including several cells. The mobile terminal in idle state is traceable into a service area by paging messages. MBMS service areas are defined per individual service with a per cell granularity. The needed bearers for conveying the MBMS service contents downlink are allocated at the various interfaces. The 3GPP group in the ambit of the ITU-T (International Telecommunication Union) has issued a complete set of Technical Specifications (TS) for the standardisation of the UMTS network. The UMTS network shares the existing GSM (Global System for Mobile communications) Core Network with the GPRS (General Packet Radio Service) addendum.

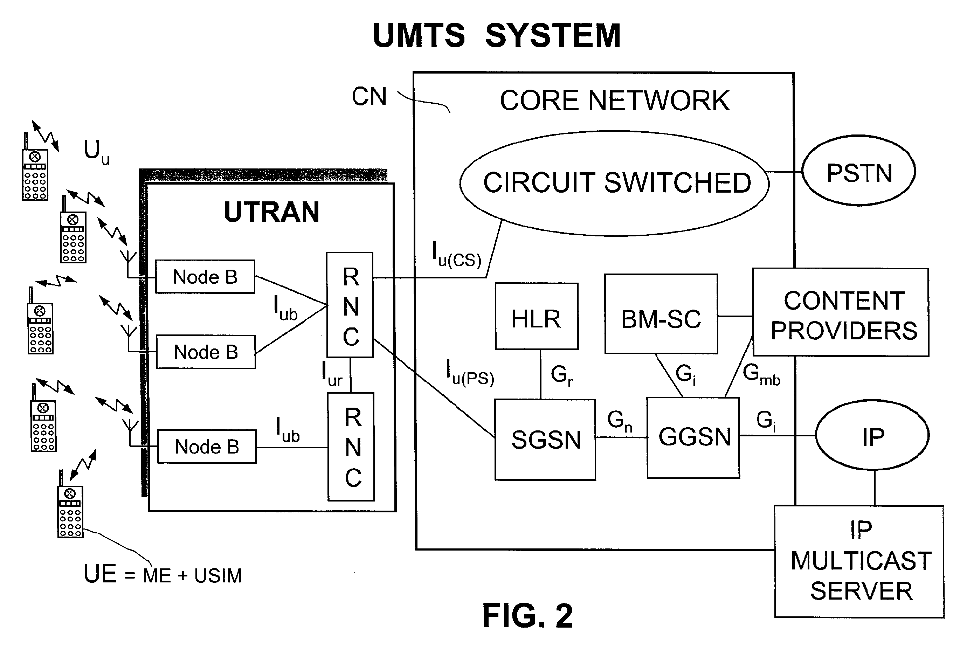

**Fig.2** shows with greater detail the UMTS system of **fig.1** giving evidence to the MBMS architecture. With reference to **fig.2** the Core Network CN is connected to an UTRAN (Universal Terrestrial Radio Access Network) access network. For the sake of simplicity a GERAN access network connected to the core network CN and also interested by the invention is not represented, being the acronym GERAN (GSM/EDGE Radio Access Network, where EDGE indicates Enhanced Data rates for GSM Evolution). The UMTS system of **fig.2** is described in the TS 23.002 (CN) and TS 25.401 (UTRAN). The UTRAN access network includes a plurality of Node B blocks and the respective RNC controllers, so as the Iub and Uu interfaces. Node B correspond to a Base Transceiver Station (BTS). A mobile station UE, includes a Mobile Equipment ME with a respective USIM card (UMTS Subscriber Identity Module). Without limitation, an UE can be either of single or multistandard. Transmission of digital signals divided in PDUs (Protocol Data Unit) implies that the transmitted signal is divided in time frames devoted to the transport of PDUs. On the Uu radio interface transmissions are based on the CDMA technique. The CDMA technique implies that multiple signals can be transmitted in the same time interval and in the same frequency band, but separated in the code domain. In case of DS-CDMA (Direct Sequence CDMA) each data bit of a user $k^{th}$ is spread out with a code sequence "$Q_k$" composed by Q time modulation units named "chips", with Q being multiple power of 2 (e.g.: Q equal to 1, 2, 4, 8, ....., 256) that define the length of the Spreading Factor (SF) $Q_k$. A maximum number K of code sequences $Q_k$ is foreseen in an UMTS cell to simultaneously allocate a variable number of user signals either on the downink (DL) or the uplink (UL) link. Different types of spread sequences are possible: e.g.: Pseudo Noise (PN), OVSF (Orthogonal Variable Spreading Factor), etc. Depending on the adopted standard, the CDMA transmissions can be further based on TDMA (Time Division Multiple Access) technique. The TDMA technique implies that each frame is subdivided in a fixed number of timeslots, each of them conveys one or more CDMA bursts, and different timeslots of the frame can be assigned to different users or alternatively to pilots or signalling channels. Still depending on the adopted standard, either Frequency Division Duplexing (FDD) or Time Division Duplexing (TDD) are possible. The present invention is implementable with the most popular mobile radio networks either of second or third generation. In case of implementation with an UMTS network, the following standards are mentioned as non-limiting examples nearest to the ones the present Application is mostly engaged with: 3GPP WCDMA UTRA-FDD 3.84 Mcps (Mega chips); 3GPP UTRA-TDD 3.84 Mcps; 3GPP UTRA-TDD 1.28 Mcps; and TD-SCDMA ((Time Division - Synchronous CDMA) 1.28 Mcps standardised by CWTS (Chinese Wireless Telecommunication Standards) committee. Each of the above standard foreseen means to carry out closed loop Power Control (PC), that is timeslot-by-timeslot the quality of the received signal is measured, on the basis of the measures the transmission power is calculated and relevant PC commands are issued to the power amplifiers.

Inside the UTRAN the upper RNC is a SRNC (Serving RNC) connected to the Core Network CN by means of a first Iu (CS) Circuits Switched (CS) interface and a second Iu(PS) Packet Switched (PS) interface. The RNC placed below is a DRNC (Drift RNC) connected to the SRNC by means of an internal Iur interface. Each RNC controlling cells is named CRNC and is interfaced to the other type of RNCs through the Iur interface. The UTRAN and the served UEs constitute a Radio Network Subsystem (RNS) disclosed in TS 23.110.

The core network CN includes a CIRCUIT SWITCHED part connected to a PSTN (Public Switched Telephone Network) and packet switched part including the following network elements: SGSN (Serving GPRS Support Node), HLR (Home Location Register), GGSN (Gateway GPRS Support Node), and BM-SC (Broadcast Multicast - Service Centre). For the sake of simplicity MSC (Message Switching Centre), VLR (Visitor Location Register) and other Network Elements known by the 3GPP specifications are not indicated. External to the core network CN there are the MBMS content providers and the IP (Internet Protocol) network connected to an IP multicast server. The following interfaces are visible inside the CN block: Gn, Gr, Gi, and Gmb. The upper RNC is interfaced to the MSC/VLR block through the Iu(CS) interface and to the SGSN node through the Iu(PS) interface. The SGSN node is further interfaced to the GGSN node, through the Gn interface, and to the HLR register through the Gr interface. The GGSN node is further interfaced to: the BM-SC centre, the MBMS content providers, and the IP network through the Gi, Gmb, and Gi interfaces, respectively.

In the operation, the core network is considered at first with particular reference to the MBMS technique. Inside the core network the MBMS functionality is not supported in the circuit switched domain but only in the GPRS part, nonetheless some operations involving MSC/VLR/HLR are in common; in particular the VLR keeps records of the individual location of the mobiles during their wandering on the coverage area. The SGSN node (with the help of those blocks) performs: mobility tracking, access control, safety, routeing, cell-reselection and other supervision functions for the GPRS users. In the MBMS architecture the SGSN performs user individual service control functions and the SGSN concentrates all individual users of the same MBMS service into a single MBMS service. The SGSN maintains a single connection with the source of the MBMS data. The SGSN duplicates the packets received from the GGSN for forwarding to each RNC involved in provision of a specific MBMS service. The GGSN terminates the MBMS GTP (GPRS Tunnelling Protocol) tunnels from the SGSN and links these tunnels via IP multicast with the MBMS data source. The GGSN duplicates the packets received from the MBMS data source for forwarding to each SGSN to which a GTP tunnel is established for a specific MBMS service. The BM-SC is an MBMS data source. MBMS data may be scheduled in the BM-SC, e.g. for transmission to the user every hour. It offers interfaces over that content provider can request data delivery to users. The BM-SC may authorise and charge content providers.

Inside the UTRAN access network the SRNC has many different tasks in the RNS, for example, is responsible for the Radio Resource Management and the Operation and Maintenance (O&M functionality) of itself and the connected Nodes B. As known, the UMTS General Protocol Architecture includes Non-Access Stratum (NAS) protocols, e.g.: CM, MM, GMM, SM, SMS, and Access Stratum (AS) protocols, e.g.: Radio protocols (TS 25.2xx, 25.3xx), Iu protocols (TS 25.41x), and Iur / iub protocols (TS 25.42x / 25.43x). The Radio protocols and Iu protocols communicate with the upper NAS. The higher layer NAS protocols handle control aspects, e.g.: Mobility Management (MM), Connection Management (CM), Session Management (SM), and Short Message Service (SMS). The Radio protocols and Iu protocols of the AS stratum are used to exchange user data and control information between the Core Network CN and the UEs. According to 3GPP TS 25.401, the protocol structures of the Iu, Iur, and Iub UTRAN interfaces are designed in horizontal layers and intersecting vertical planes, logically independent of each other. There are two main horizontal layers: the Radio Network Layer, and the Transport Network Layer; and three vertical planes: the Control Plane, the User Plane, and the Transport Network Control Plane. All UTRAN related issues are placed in the Radio Network Layer only. The Transport Network Layer is used to offer transport technologies without any UTRAN specific requirements. The Control Plane is used for all UMTS-specific control signalling. It includes the Application Protocols, i.e. RANAP (Radio Access Network Application Part), RNSAP (Radio Network Subsystem Application Part), NBAP (Node B Application Part) and the signalling bearer for transporting the Application Protocol messages. The User Plane is used to transport all user data, e.g. MBMS data, and includes the data streams and the data bearers for the data streams. Each data stream is characterised by one or more frame protocols specified for those interfaces. The Transport Network Control Plane is used for all control signalling within the Transport Layer. It contains no Radio Network Layer information and its central aspect is the ALCAP (Access Link Control Application Part) used for set up data bearer for the User Plane, as described in TS 25.410, 430, and 430. According to 3GPP TS 25.301, the Radio Interface Protocols are used for the transfer of user and control data between the UE and UTRAN. The protocol architecture consists of two vertical planes: the Control Plane and the User Plane intersecting three superimposed horizontal layers. The Control Plane is used for all UMTS-specific control signalling. The User Plane is used to transport all user data, e.g. MBMS data. The lowest Layer 1 is the PHY (Physical Layer). Layer 2 is subdivided into the following sublayers: MAC (Medium Access Control), RLC (Radio Link Control), PDCP (Packet Data Convergence Protocol), and BMC (Broadcast / Multicast Control). MAC and RLC are used both for the User Plane and Control Plane. PDCP and BMC are only defined for the User Plane. Only the RRC (Radio Resource Control) protocol is defined for Layer 3. The RRC is interfaced to the protocols of layers 1 and 2 to provide local interlayer services and configuration control. The higher layer NAS signalling, such as: MM, CM, SM, and SMS are transparently transmitted between UE and CN, therefore they are not in the scope of the Radio Interface Protocols.

With particular reference to **Ref.[4]**, a multicast functionality entitled "MAC m" is added in the MAC (Medium Access Control) layer of the UMTS system of **fig.2** for introducing MBMS related transport channels. Two logical channels are considered for MBMS: MCCH (MBMS Control Channel) and MTCH (MBMS Traffic Channel). MCCH logical channel is defined as a p-t-m downlink channel for transfer of control plane information between network and UEs in RRC (Radio Resource Control) either in Idle or Connected Mode. The control plane information on this channel is MBMS specific and is sent in a cell to UEs with an activated (joined) MBMS service. The MTCH logical channel is defined as a p-t-m downlink for transfer of user plane information between network and UEs in either RRC Connected or Idle Mode. The user plane information on this channel is MBMS specific and is sent in a cell to UEs with an activated MBMS service. The user plane protocol termination for the MTCH channel includes a first CRNC protocol stack transmitting towards a second stack placed at the UE side. The two stacks include (top-down): PDCP, RLC, and MAC. The stack at the UE side further includes a lower layer PHY to terminate the transmissions from Node B. The MBMS functionalities are required to be included in PDCP protocol layer.

Considering the MBMS receptions for different RRC States/Modes, the BCCH (Broadcast Control Channel) contains information regarding the MCCH, while the latter contains information on the MTCH. In idle mode reception, the UE shall:

- if the UE supports MBMS and:

  - if the UE has activated an MBMS service and this service is available in the cell where the UE is situated (i.e. MTCH and MCCH are available),
  - act on RRC messages received on MCCH and:

  - if the MBMS service requires the establishment of an RRC Connection, inform upper layers that the MBMS Service requires the establishment of an RRC Connection,
  - if the MBMS service does not require the establishment of an RRC Connection, listen to the common transport channel on which the MTCH is mapped, e.g.: FACH (Forward Access Channel).

The RRC connected mode for MBMS reception is defined for the following states: URA_PCH (User Registration Aera_Paging Channel), CELL_PCH, CELL_FACH (Forward Access Channel), CELL_DCH (Dedicated Channel), etc.

Several signalling flows are needed to be provided for the MBMS functionality, e.g. between: CN and CRNC; CRNC and SRNC; CRNC and UE; SRNC and UE. Signalling flows, and the involved bearers, convey MBMS information through the: Iu, Iur, Iub, and Uu interfaces of the UMTS network of **fig.2**. As far as service contents are concerned, for each MBMS service, data is transferred via a MBMS RAB (Radio Access Bearer) between the UE and the SGSN. For each MBMS service, data is transferred via one MBMS Iu bearer between RNC and the SGSN in the whole service area. Each CRNC within an MBMS service area will maintain an MBMS context including a list of connected mode UEs which are present in each cell of the CRNC and which have activated an MBMS service (the one indicated by its Service-ID). Each CRNC MBMS context is associated with an MBMS Service-ID. The list will include at least the U-RNTI (User Radio Network Temporary Identity) of the UEs. In the known specifications, the CRNC MBMS context is established when the MBMS Iu bearer is established between the RNC and the SGSN for a specific MBMS service (not per UE individually). Several known procedures employ signalling flows for MBMS, e.g.: Service Context Establishment; MBMS Multicast Service Activation; MBMS RAB set-up ; Channel type switching from p-t-m to p-t-p over Uu interface; MBMS Attach over Iur; BMS Detach over Iur; MBMS p-t-m Transmission Initiation over Iur; MBMS p-t-m Transmission Termination over Iur, etc. One common identity, namely: Temporary Mobile Group Identity (TMGI) is allocated to all members of each multicast group which are served by the same SGSN. This could be allocated during a Routing Area Update, a GPRS Attach, or a P-TMSI Reallocation procedure before the MBMS data transfer (e.g. the first TMGI allocation might occur when the mobile joins the IP multicast group).

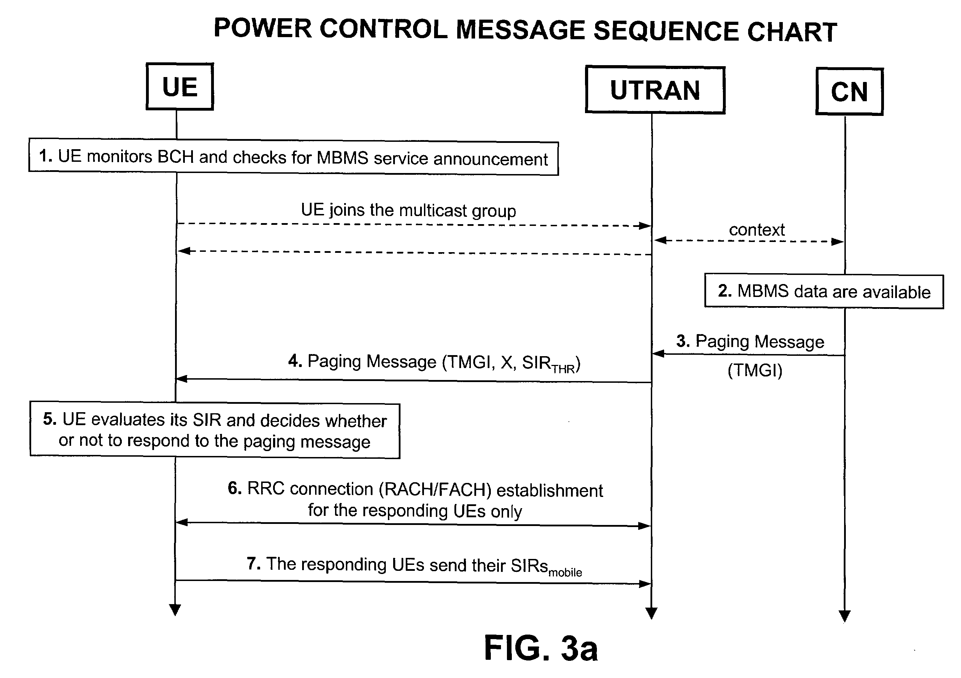

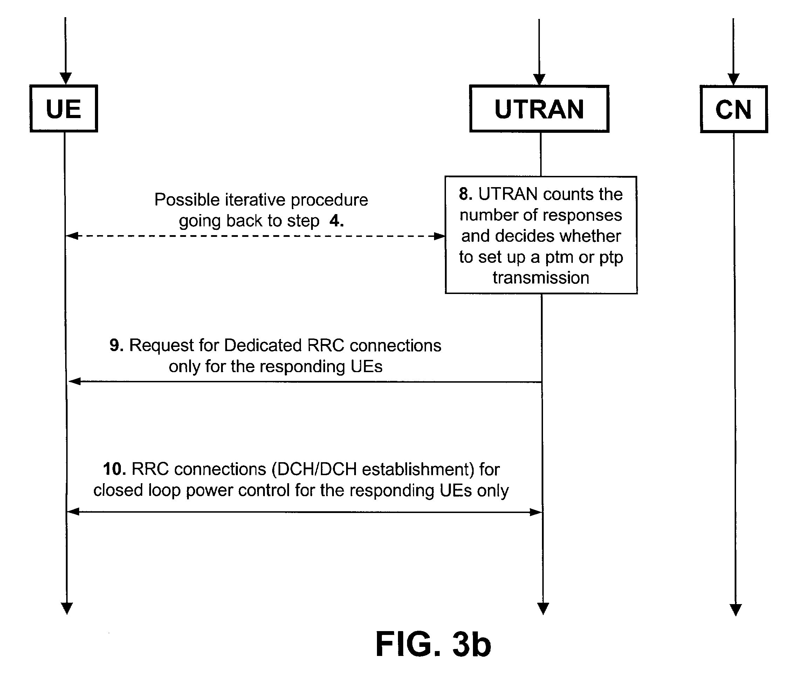

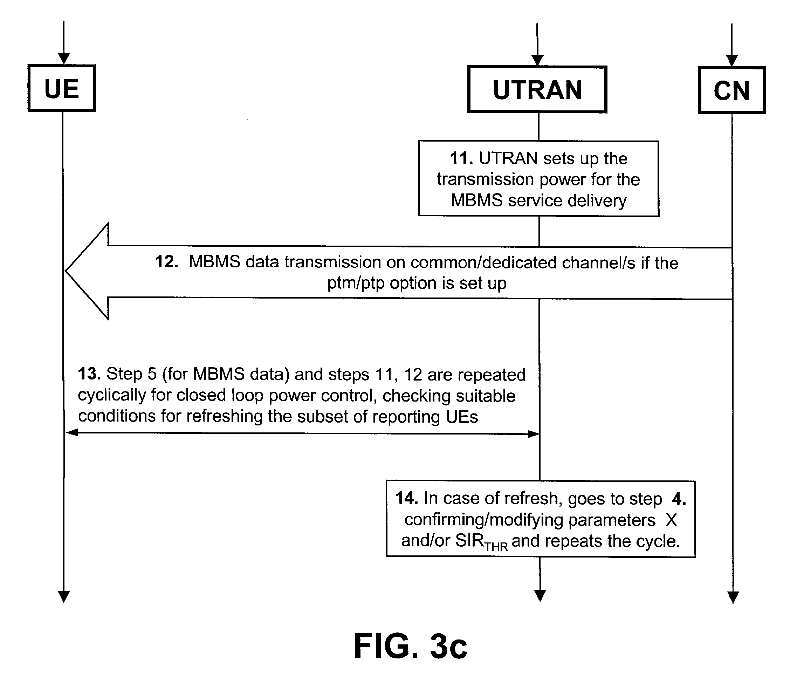

With reference to the message sequence chart of **fig.3a, 3b,** and **3c,** the power control method of the non-limiting embodiment is now described in detail. A timeline of the message sequence chart departs from the top of **fig. 3a** for UE, UTRAN, and CN involved parts of the UMTS network. The UTRAN access network has to deliver the same service in a cell to N users assumed, for sake of simplicity, all in idle mode. The cell is any of the service area of the considered valuable service and the UE is any camping on the cell. One MBMS service may consist of multiple successive sessions. One MBMS session is a continuous and time-bounded reception of that service by the UE. A single MBMS service can only have one session at any time. One MBMS service is available between the start of the service announcement and the end of either the last session or the stop of service announcement. As already anticipated, the power control of the present invention is a cyclic procedure spanning the whole service availability time. Without limitation the 3GPP WCDMA UTRA-FDD 3.84 Mcps system is assumed. In the following MBMS indicates multicast only. The power control method includes the following steps:

Step 1.　　　　　The core network Announces the availability of an MBMS service: several opportunities are possible, e.g. broadcast on the BCCH channel. The UE that normally reads cell information on the BCCH channel can discover the availability of the MBMS service included the position of the MCCH control channel, while the latter contains information on the MTCH service channel. Then all the interested UEs initiate a MBMS Multicast Service Activation procedure that registers the users in the network to enable the reception of data from a specific MBMS service. At the end a context is created in the network for the transmission of the multicast service and all the interested UEs are joined to the multicast group.

**Step 2.**     MBMS data are available at the core network CN.

**Step 3.**     The SGSN (CN) sends a paging message to the involved RNCs to notify the incoming service content. The paging message includes the group ID parameter TMGI (Temporary Mobile Group Identity) and the indication of the MBMS service area. The SGSN creates an UE specific MBMS context, which stores the parameters of the activated MBMS multicast service.

**Step 4.**     Through the Node B the paging message is broadcast in the cell. The message, other than TMGI, contains a parameter X ($X \geq 1$) and a signal to interference ratio threshold $SIR_{THR}$. As already said, the parameter X is a means to avoid that all the N users can answer at same time to the paging message increasing the interference in the cell and jamming the system if N, the number of users in the cell, is high. $SIR_{THR}$ is the threshold to select the subset of users that will have the worst signal to interference ratio.

**Step 5.**     The UEs receive the paging message on the Paging Channel (PCH) and measure the relevant Signal to Interference Ratio ($SIR_{mobile}$). Operatively, each UE firstly measures the Received Signal Code Power (RSCP) on the PCH channel: that is the received power on one spread code measured on the code bits; secondly measures the Interference Signal Code Power (ISCP): that is the interference on the received signal measured on the pilot bits; then a first evaluation of $SIR_{mobile}$ is obtained from:

$$SIR_{mobile} = (RSCP / ISCP) \cdot (SF/2),$$

where SF is the Spreading Factor of the PCH channel.

Each UE checks in the order the following two logical conditions:

• extracting a random number R between 0 and 1, it results: $R < 1/X$ (other methods obtaining the same result are possible); in case the above condition is not true the check of the second condition is advantageously skipped ad the UE excludes itself at once from the subset of the reporting users; otherwise:

• $SIR_{mobile} \leq SIR_{THR}$, where: $SIR_{mobile}$ is the evaluation of the SIR measured by the UE.

**Step 6.**     Only the UEs that fulfil the previous two criteria request to establish RRC signalling connections, the other remain in idle state. The requests are transmitted on the RACH (Random Access Channel) channel and the network responds on FACHs.

**Step 7.**     The UEs that fulfil the two criteria respond by sending their $SIRs_{mobile}$ to the Node B.

**Step 8.**     The UTRAN checks the number of responding UEs to know whether to transmit the MBMS service content either point-to-point or point-to-multipoint. Two procedure are described: a first one has statistical nature, the second one is iterative. Two thresholds: $D_{THR1}$ and $D_{THR2}$ are fixed to establish the multicast users present in the cell. Before data transmission the two thresholds are the same: $D_{THR1} = D_{THR2}$; during data transmission the two thresholds are spaced out: $D_{THR1} < D_{THR2}$ to avoid bouncing across the threshold. Without limitation, $D_{THR1} = 4$ and $D_{THR2} = 8$ is suggested, starting from the initial common value of 8 users. $D_{THR1}$ and $D_{THR2}$ are the same for the two proposed procedures.

**First procedure:** the probability that a user responds to the paging message is $P_{reply} = 1/X \cdot P(SIR_{mobile} < SIR_{THR})$, where the cumulative distribution $P(SIR_{mobile} < SIR_{THR})$ is assumed normal. The number of users that respond to the paging is $N_{paging} = N \cdot P_{reply}$; then $N = N_{paging} / P_{reply}$. Now if:

-    $N \leq D_{THR1}$ the transmission is point-to-point;
-    $N > D_{THR2}$ the transmission is point-to-multipoint.

**Second procedure:** the paging message is cyclically repeated inside the cell for a time $T_{MAX}$,

modifying the parameter X and/or $SIR_{THR}$ properly. When $T_{MAX}$ elapses, if the last $N_{paging}$ is:

- $N_{paging} \leq D_{THR1}$ then the transmission is a point-to-point;
- $N_{paging} > D_{THR2}$ then the transmission is a point-to-multipoint.

In the following a simple strategy to vary $SIR_{THR}$ and/or X is proposed:

a) The operator sets the range $[SIR_{MIN}, SIR_{MAX}]$ within the $SIR_{THR}$ should vary. Then we assume: X = 4 and $SIR_{THR} = SIR_{MIN} + 1$ dB for the first paging message;
b) If $N_{paging} > D_{THR2}$ the iteration is stopped and a p-t-m transmission is set up. Otherwise X = 2 and $SIR_{THR} = SIR_{MIN} + 1$ dB and a second paging message is sent;
c) If after the second paging message $N_{paging} > D_{THR2}$ the iteration is stopped and a p-t-m transmission is set up. Otherwise X = 1 and $SIR_{THR} = SIR_{MIN} + 1$ dB and a third paging message is sent;
d) If after the third paging message $N_{paging} > D_{THR2}$ the iteration is stopped and a p-t-m transmission is set up. Otherwise X = 4 and $SIR_{THR} = SIR_{MIN} + 2$ dB and a fourth paging message is sent;
e) .............. ..
f) If $T_{MAX}$ elapses and $N_{paging} < D_{THR1}$ a decision for point-to-point transmission is taken, otherwise if $N_{paging} > D_{THR2}$ the decision is fro point-to-multipoint transmission.

The UTRAN initiates an MBMS RAB set-up procedure to deliver the specific MBMS service on shared/dedicated resources at the Uu interface. In case that p-t-m is selected, all the multicast UEs have assigned the same spreading code to access the common traffic data channel. In case of p-t-p is selected, the multicast UEs have assigned spreading codes different to each other to access dedicated traffic data channels.

**Step 9.** The UTRAN sends RRC signalling connection requests (for uplink and downlink) to the UEs that have positively answered to the paging. The subset of the reporting users and the relative connections don't change until a condition for updating comes true.

**Step 10.** For all the users, belonging to the responding subset, an RRC connection is established providing both an uplink signalling DCH (Dedicated Channel) and a downlink signalling DCH. Via these channels the responding UEs send their $SIRs_{mobile}$ to the Node B and receive back power control commands to vary the transmission power of the signals to be reported.

**Step 11.** The Node B, on the basis of the received $SIRs_{mobile}$ can determine what power the multicast service will be provided at. Depending on either p-t-p or p-t-m option is selected, the downlink transmission power $P_{TDL}$ is diversely calculated. In particular, the downlink transmission power of the MBMS signal transmitted on dedicated channels (p-t-p) is calculated as described in the relevant standardisation. As far as the p-t-m option is concerned, the downlink transmission power of the MBMS signal can be set up in several ways. For instance the node B can transmit the signal with power according to the following three options:

1. $P_{TDL} = 2 \cdot (SIR_{WORST} . ISCP) / SF$, where $SIR_{WORST}$ is the SIR of the UE who reports the worst $SIR_{mobile}$ and ISCP is evaluated by the Node B on the pilot bits of the service timeslot.
2. $P_{TDL} = 2 \cdot (SIR_{MEAN} . ISCP) / SF$, where $SIR_{MEAN}$ is the mean $SIR_{mobile}$ value calculated over the reporting subset.
3. $P_{TDL} = 2 \cdot (SIR_{\sigma} . ISCP) / SF$, where $SIR_{\sigma} = SIR_{MEAN} - \sigma$, and $\sigma^2$ is the variance of the $SIR_{mobile}$ distribution in the cell, which can be evaluated with different methods.

The right power $P_{TUL}$ of the reporting signals ($SIRs_{mobile}$) is calculated as described in the relevant standardisation on the basis of the $SIRs_{UL}$ measured by the Node B in correspondence of the reporting signals.

**Step 12. (p-t-m).** The downlink transmission power is set by Node B according to the selected $P_{TDL}$ option and the MBMS data transmission is started on shared resources. All the users joined the multicast group can receive the service. In theory, for a p-t-m signal the only $SIR_{WORST}$ is needed in order to update the transmission power. When the $SIR_{WORST}$ is near to that one obtainable in correspondence of the maximum power reserved to the MBMS service, the downlink Power Control is useless as the base station shall transmit the signal always at maximum allowed power. Concerning the uplink power setting of the reporting signal, the Node B transmits TPC commands on dedicated channels to set the transmission power $P_{TUL}$ of the reporting UEs.

**Step 12. (p-t-p).** The downlink transmission power $P_{TDL}$ is set up by Node B on individual basis for each reporting user only. The individual power level is determined as described in the relevant 3GPP specifications. Concerning the uplink power setting of the reporting signal, the Node B transmits TPC commands on dedicated channels to set the transmission power $P_{TUL}$ of the reporting UEs.

**Step 13.** A closed loop power control (with either timeslot or frame period) is performed for controlling the downlink transmission level of the multicast service, and the uplink transmission level of the reporting signalling ($SIRs_{mobile}$). The closed loop power control is carried out by the iteration of the step 5 (MBMS data replace paging), plus steps 11 and 12. When an user belonging to the reporting subset makes handover to another cell, or the $SIR_{mobile}$ of an user belonging to the reporting subset exceeds the $SIR_{THR}$, or the $SIR_{mobile}$ of an user not initially belonging to the reporting subset goes under the $SIR_{THR}$, or an updating time $T_{REFRESH}$ elapses, the Node B needs to update the subset of reporting users. This is done by repeating the paging and varying, if necessary, the parameter X and the $SIR_{THR}$ in order to optimise the dimension of the reporting subset.

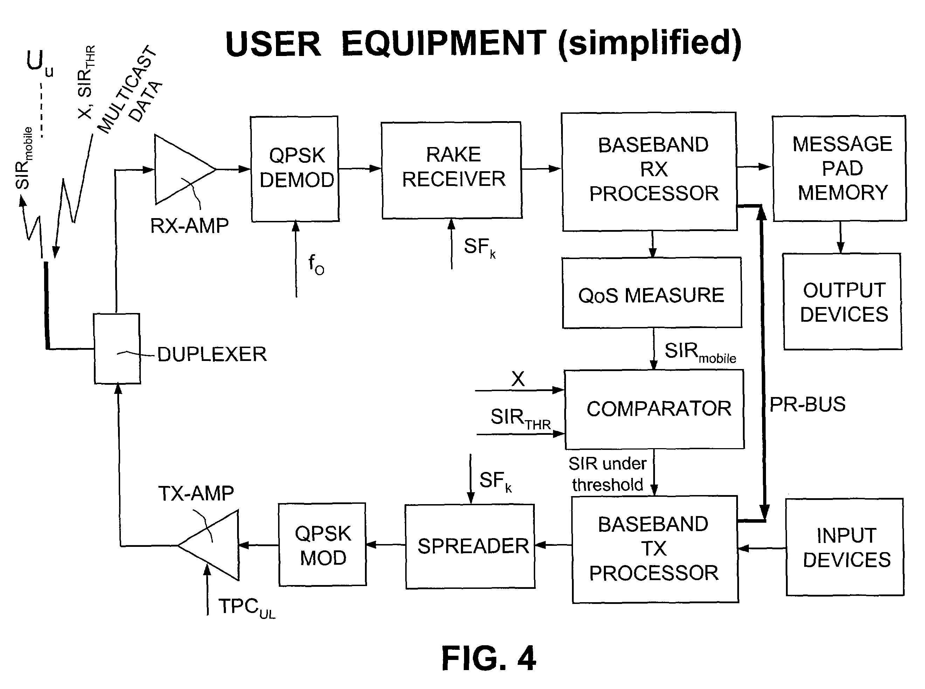

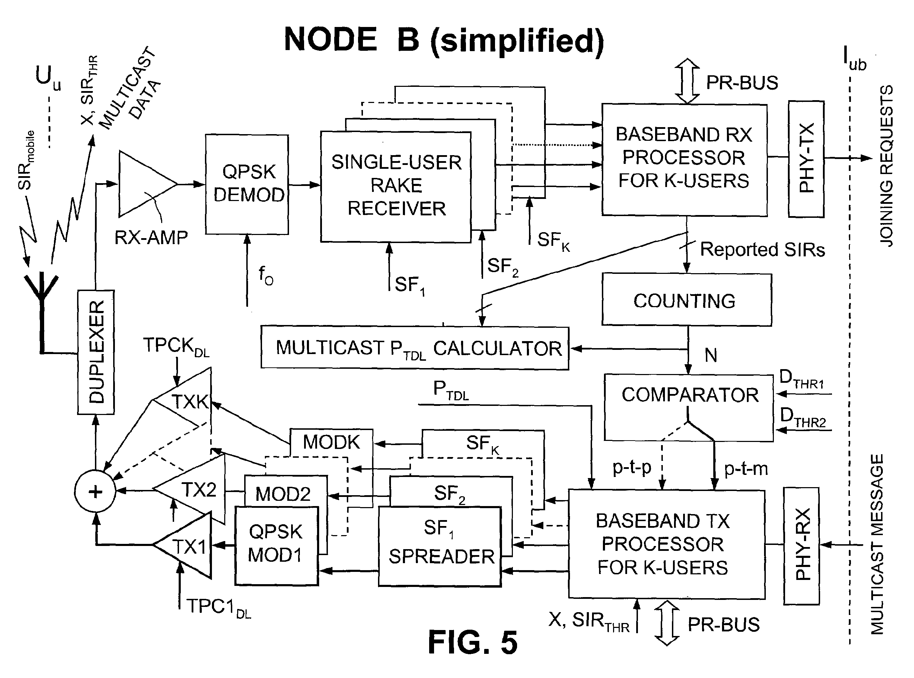

With reference to the **figures 4** and **5**, the User Equipment (UE) and the Node B which cooperate to carry out the power control method of the invention are respectively described. The block diagram representation is intentionally simplified to underline the only features of the present invention. In particular: filtering; intermediate and baseband frequency conversion; A/D and D/A conversion, carrier and symbol synchronisation; chip, frame, and cell synchronisation, etc., are not shown. The apparatuses of the **figures 4** and **5** are referable, without limitation, to a WCDMA standard having many more spreading sequences than the narrowband UTRAN at 1.28 Mcps. The UE of **fig.4** includes a receiving section, a transmitting session, and a common part. The receiving section includes the cascade of the following blocks: RX-AMP, QPSK DEMOD, RAKE RECEIVER, BASEBAND RX PROCERSSOR, MESSAGE PAD MEMORY, and OUTPUT DEVICES. The transmitting section includes the cascade of the following blocks: INPUT DEVICES, BASEBAND TX PROCERSSOR, SPREADER, QPSK MOD, and TX-AMP. The common part includes: DUPLEXER filter, QoS MEASURE, and COMPARATOR. Two or more baseband blocks shown separated in the functional diagram may be part of an unique VLSI device, in particular the two processors RX and TX are connected to a common bus PR-BUS. The low-noise radiofrequency amplifier RX-AMP receives an RF signal from the duplexer connected to a dipole antenna, and outputs a signal towards the QPSK demodulator. The last receives a local carrier $f_o$ and outputs a demodulated signal towards the RAKE receiver. This type of receiver is well known in the art, see **Ref.[7]** chapter 14.5. In presence of many PN codes (more than 16), RAKE is preferred in respect to the Zero-forcing and similar detectors that decorrelate the multiuser interference. A description of these type of intrinsically interference-resistant receivers is given in **Ref.[7]** chapter 15. The RAKE receiver is possible if the signal bandwidth W is larger than the fast fading coherence band ($W \gg (\Delta f)_c$), as it happens for all the DS-CDMA systems. The above condition is equivalent to: $T_c \ll T_m$ (where $T_c$ is the chip period and $T_m$ is the maximum echo delay due to multipath spread. Under these conditions the channel is modelled by a truncated tapped delay line (FIR) with L statistically independent time-variant taps weights, that are equivalent to samples of the impulse response time spaced by $T_c$. It is apparent that the FIR model of the channel provides at the input of the receiver L replicas of the same transmitted signal. The RAKE receiver (demodulator) includes a despreading device (mixer) which receives the pseudo noise code $SF_k$ assigned to the k-th user (the one of fig.4) and outputs corresponding despread sequences at symbol rate $T_s$. This sequence reaches the input of a truncated tapped delay line with L taps $T_s$ spaced. Assuming the channel impulse response as known, each tap has departing fingers attempt to collect the signal energy from all the received signal paths that fall within the span of the delay line and carry the same information. Thus the RAKE demodulator is equivalent to a maximal ratio combiner in a system with L-th order diversity. The symbol sequence at the output of the RAKE receiver is sampled at symbol rate and forwarded to a decision circuit. The Baseband RX processor carries out usual physical layer operations, such as: frame disassembling, FEC-decoding, de-ciphering, de-interleaving, and de-scrambling. The baseband RX processor performs higher level standard protocol functions in order to:

- Monitor both BCH and PCH channel: the first one for detecting broadcast information such as the service announcements, and the second one to read out information (TMGI, X, $SIR_{THR}$, $SF_k$, scrambling code, ciphering sequence) needed to enable/disable the reporting of service-related QoS measures ($SIR_{mobile}$).
- Set up RRC dedicated connections on downlink and uplink directions, either autonomously or upon requested.
- Assemble the content of the received multicast message and store it in the memory pad connected to the output devices.
- Control the QoS MEASURE functional block in order to measure: $SIR_{mobile}$, BER, BLER and other QoS related parameters.
- Estimate the channel impulse response in correspondence of the pilot burst transmitted by Node B, and feed the RAKE receiver with said response.

The QoS measured parameters, with particular reference to $SIR_{mobile}$, are sent to the comparator block, which also receives the parameter X and $SIR_{THR}$ and operates according to **Step 5** of the method in order to detect the SIR under threshold to be forwarded to the baseband TX processor. The last receives several type of input signals from: the input devices, the baseband RX processor, the comparator block, and carries out all the operations specified at the various protocols, starting from the physical layer ones, such as: scrambling, FEC-coding, interleaving, frame assembling, and ciphering obtaining a digital flux at the output. At higher protocol level the baseband TX processor sets up RRC connections on dedicated uplink channels, either autonomously or when requested. The QoS parameters are put in a dedicated signalling channel, so as the multicast service request (joining) generated by the user. Besides, the TX processor receives the uplink power control commands issued by Node B and sets out in correspondence relevant $TPC_{UL}$ commands to vary the gain of the power amplifier TX-AMP, accordingly. The digital flux at the output of baseband TX processor is forwarded to the cascade of: spreader block $SF_k$, QPSK modulator, and the variable power amplifier TX-AMP whose RF output signal is sent to the duplexer filter to be forwarded to the dipole antenna.

The Node B shown in **fig.5** includes a receiving section, a transmitting session, and a common part. The receiving section includes the cascade of the following blocks: RX-AMP, QPSK DEMOD, multiple SINGLE-USER RAKE RECEIVER, BASEBAND RX PROCERSSOR FOR K-USERS, and PHY-TX. The transmitting section includes the cascade of the following blocks: PHY-RX, BASEBAND TX PROCERSSOR FOR K-USERS, multiple SPREADER 1,..., K, multiple QPSK MOD 1,...,K,, and multiple TX-AMP 1,...,K, and a power adder. The common part includes: DUPLEXER filter, MULTICAST PT CALCULATOR, COUNTING, and COMPARATOR. Two or more baseband blocks shown separated in the functional diagram may be part of an unique VLSI device, in particular the two processors RX and TX are connected to a common bus PR-BUS. The low-noise radiofrequency amplifier RX-AMP receives an RF signal from the duplexer connected to a dipole antenna, and outputs a signal towards the QPSK demodulator. The reception signal collects the transmission from all the mobile UEs diversely spaced from the Node B antenna. The QPSK demodulator also receives a local carrier $f_o$ and outputs a demodulated signal towards the multiple RAKE receiver. The last is subdivided in K autonomous RAKE receivers as the K PN sequences $SF_1$,..., $SF_K$ singularly assigned to the receivers. The k-th RAKE receiver operates as already said on the basis of the k-th PN code and the impulse response samples relevant to the k-th radio path connecting the k-th UE. The K outputs of the multiple RAKE receiver reach K inputs of the baseband RX processor which carries out on the singular input signal the physical layer operations already described for the UE. Furthermore the various fluxes are sent to the PHY-TX block that multiplexes them on output fluxes according to the format valid at the Iub interface. The baseband RX processor performs higher level standard protocol functions in order to:

- Set up RRC connections at the Uu interface on dedicated channels, in particular for receiving the joining requests from the interested UEs.
- Set up RRC connections at the Uu interface on dedicated channels, in particular for receiving the paging responses from the subset of $SIRs_{mobile}$ reporting UEs (and/or other QoS related parameters BER, BLER).
- Transfer the received $SIRs_{mobile}$ to the counting block and to the multicast $P_{TDL}$ calculator block.
- Estimate as many channel impulse responses as the reporting users in the cell, in order to feed the battery of RAKE filters with the associated coefficients.

The counting block counts the reported $SIRs_{mobile}$ and transfers the result N to the comparator block. The last receives the two thresholds $D_{THR1}$, $D_{THR2}$ and operates as described in the method **Step 8** to decide either for p-t-m or p-t-p. The decision is communicated to the baseband TX processor. The multicast $P_{TDL}$ calculator block receives the reported $SIRs_{mobile}$ and calculates the power value $P_{TDL}$ according to one out of the three options described in the method **Step 11.** The value of $P_{TDL}$ is communicated to the baseband TX processor.

As far as the transmission section is concerned, the PHY-RX block receives a certain number of high-rate fluxes according to the format valid at the Iub interface. These fluxes are demultiplexed into lower-rate digital fluxes sent to the baseband TX processor. The last collects all relevant inputs inside the Node B (voice, data, signalling) and generates a maximum of K digital streams to be directed to the K users; then performs all the physical layer operations already described for the UE. The baseband TX processor performs higher level standard protocol functions in order to:

- Receive BCH-related signalling information at the Iub interface (service announcement) and plan the BCH channel burst.
- Receive PCH-related signalling information at the Iub interface (service notification, TMGI) and plan the PCH channel burst by further include X and $SIR_{THR}$.
- Receive either the p-t-m or p-t-p decision from the comparator and set up relevant RAB/s ($SF_k$, scrambling code, ciphering sequence, etc.), accordingly.
- Receive the multicast data at the Iub interface and provide either one (p-t-m) or N (p-t-p) identical data sequences to be inputted to the one or the N spreading blocks.
- Receive, in case of p-t-m is decided, the multicast power value $P_{TDL}$ from the relevant calculator block and send a unique command for the only RF amplifier deputed to transmit the multicast signal. The transmission path on common channel is indicated with thicker line inside the Node B. Without limitation the path includes the following shared elements: PN code $SF_1$ and the relevant spreader, QPSK MOD1, TX1 amplifier and $TPC1_{DL}$ command.

- Receive, in case of p-t-p is decided, a number $N \leq K$ of different $P_{TDL}$ values (calculated as indicated in the relevant specifications) and send corresponding commands $TPC1_{DL},....$ , $TPCN_{DL}$ to the RF amplifiers TX1, ...., TXN deputed to transmit the multicast signal with PN codes $SF_1,...,SF_N$.

The K digital streams at the output of baseband TX processor are sent to respective K spreading blocks (the one/s for the PN code assigned for multicast plus other blocks assigned to other users in the cell). The K spread sequences at the output of K spreading blocks reach the inputs of K QPSK modulators and the modulated signals are sent to the inputs of K RF transmission power amplifiers with variable gain. The K gains are set upon reception of respective commands $TPC1_{DL},....,TPCK_{DL}$ from the baseband TX processor. All the amplified RF signals are summed up by a cascade of circulators and the cumulative signal is sent to a relevant port of the duplexer filter to be coupled to the transmitting antenna. Other embodiments of the RF transmission stadium are possible. According to an alternative embodiment, an unique RF transmission power amplifier with variable gain is provided and the K spread signals are forwarded to respective variable attenuators commanded by the baseband TX processor; the resulting signals are summed up at the input of the unique TX power amplifier with high dynamic gain.

## Claims

1. Method to control the transmission power of at least one multicast service transmitted from a base station (Node B) in a cell belonging to a service area of a mobile radio network towards a group of user mobile stations (UE) requesting the multicast service, **characterised in that** includes the following steps:

   a) the base station (Node B) pages a message to notify downlink to the requesting users (UE) an incoming multicast data session, the message including at least a quality of service threshold ($SIR_{THR}$) expected for the reception of the multicast signal;
   b) each user (UE) measures a quality parameter of the received signal ($SIR_{mobile}$), compares the measured quality ($SIR_{mobile}$) with the said quality threshold ($SIR_{THR}$) and only if the said threshold is not surpassed transmits the quality measure ($SIR_{mobile}$) to the base station;
   c) the base station (Node B) counts the number of quality measures ($SIR_{mobile}$) received from the reporting users (UE) and decides to transmit the multicast service on either a common channel in case the counting surpass a reporting threshold of a fixed number of users, or more channels dedicated to the reporting users in case the reporting threshold is not surpassed;
   d) the base station (Node B) calculates and sets up the transmission power of the multicast signal on the basis of the reported quality measures ($SIR_{mobile}$) and the common/dedicated channel decision, in order to keep the transmission power just above the quality threshold ($SIR_{THR}$).

2. The method of the preceding claim, **characterised in that** said notification message also includes a discriminating parameter (X) usable by the users (UE) to be randomly excluded from reporting the quality measure ($SIR_{mobile}$) to the base station.

3. The method of the preceding claim, **characterised in that** said discriminating parameter (X) is operated by the users (UE) before the quality measure ($SIR_{mobile}$) is performed.

4. The method of one of the preceding claim, **characterised in that** said reporting threshold is split up in two thresholds during multicast data transmission, the greater one to be crossed for selecting transmission on common channel, while the lower one for selecting transmission on dedicated channels.

5. The method of the preceding claim, **characterised in that** the comparison step c) includes the step of:

   - calculating the probability that an user enters the reporting subset, on the basis of said discriminating parameter (X) and the known cumulative distribution of the quality parameters;
   - dividing the said counting by the said probability and comparing the result with the said greater and/or lower reporting thresholds.

6. The method of claim 4, **characterised in that** steps a) to c) are cyclically repeated for a given maximum time modifying said discriminating parameter (X) and/or said quality of service threshold ($SIR_{THR}$) step-by-step, and the last counting being compared with said greater and/or lower reporting thresholds when the maximum time elapses.

7. The method of one of the preceding claim, **characterised in that** said multicast service is transmitted on sequential timeslots of repetitive frames and the steps b) and d) are repeated each timeslot.

8. The method of the preceding claim, **characterised in that** step c) is repeated at each timeslot for checking whether:

   - a user belonging to the former reporting subset has reported a quality measure ($SIR_{mobile}$) greater than said quality threshold ($SIR_{THR}$), or
   - a user not belonging to the former reporting subset has reported a quality measure ($SIR_{mobile}$) lower than said quality threshold ($SIR_{THR}$),

   in order to repeat steps a) to d) in affirmative case.

9. The method of claim 7, **characterised in that** the network checks if at least one user belonging to the reporting subset has completed a handover to another cell or if the said quality measure ($SIR_{mobile}$) of a user belonging to the reporting subset exceeds the said quality threshold ($SIR_{THR}$), in order to repeat steps a) to d).

10. The method of claim 7, **characterised in that** the base station checks if a given time ($T_{REFRESH}$) for updating the reporting subset is elapsed in order to repeat steps a) to d).

11. The method of claim 8, or 9, or 10, **characterised in that** the said discriminating parameter (X) and/or the said quality threshold ($SIR_{THR}$) are/is modified in order to optimise the dimension of the reporting subset.

12. The method of one of the preceding claim, **characterised in that** the said quality of service threshold ($SIR_{THR}$) and the said quality measure ($SIR_{mobile}$) are the signal-to-interference ratio also termed SIR.

13. The method of the preceding claim, **characterised in that** the said multicast service is transmitted by code division multiple access and in case transmission on common channel is decided, the base station (Node B) calculates the transmission power $P_{TDL}$ at step d) according to the following expression: $P_{TDL} = 2 \cdot (SIR_{WORST} \cdot ISCP) / SF$, where: $SIR_{WORST}$ is the SIR of the user (UE) who reports the worst signal-to-interference ratio; SF is the spreading factor of the access code; and ISCP is the power of the interference signal measured by the base station (Node B) on pilot bits associated to the channel.

14. The method of claim 12, **characterised in that** said multicast service is transmitted by code division multiple access and, in case the transmission on common channel is decided, the base station (Node B) calculates the transmission power $P_{TDL}$ at step d) according to the following expression: $P_{TDL} = 2 \cdot (SIR_{MEAN} \cdot ISCP) / SF$, where: $SIR_{MEAN}$ is the mean SIR value calculated over the reporting subset; SF is the spreading factor of the access code; and ISCP is the power of the interference signal measured by the base station (Node B) on pilot bits associated to the channel.

15. The method of claim 12, **characterised in that** the said multicast service is transmitted by code division multiple access and in case transmission on common channel is decided the base station (Node B) calculates the transmission power $P_{TDL}$ at step d) according to the following expression: $P_{TDL} = 2 \cdot (SIR_{\sigma} \cdot ISCP) / SF$, where: $SIR_{\sigma} = SIR_{MEAN} - \sigma$; $SIR_{MEAN}$ is the mean SIR value calculated over the reporting subset; $\sigma^2$ is the variance of the SIR distribution in the cell; SF is the spreading factor of the access code; and ISCP is the power of the interference signal measured by the base station (Node B) on the pilot bits associated to the channel.

16. Mobile radio system to carry out the method of the claim 1 constituted by a core network (CN) connected to an access network (UTRAN) spread over a service area subdivided in cells to give access to a plurality of user mobile stations (UE) connected to a base station (Node B) of the serving cell, and the core network receiving valuable multicast service data to be irradiated on the cells employing physical resources ($SF_1$, $SF_2$, ...., $SF_K$) of the radio interface (Uu), **characterised in that** includes:

   a) means of the base station (BASEBAD TX PROCESSOR) for paging the multicast users with a threshold value ($SIR_{THR}$) of the quality of service expected for the reception of the multicast signal;

b) means of the mobile station (QoS MEASURE) for measuring a quality parameter ($SIR_{mobile}$) of the received signal;

c) means of the mobile station (COMPARATOR) to compare the measured quality ($SIR_{mobile}$) with the received quality threshold ($SIR_{THR}$) and enable the transmission of the quality measures ($SIR_{mobile}$) to the base station only if the said quality threshold ($SIR_{THR}$) is not surpassed;

d) means of the base station (COUNTING) to count the number of quality measures ($SIR_{mobile}$) received from the reporting users (UE);

e) means of the base station (COMPARATOR) to compare the said counting (N) with at least a reporting threshold ($D_{THR1}$, $D_{THR2}$) of a fixed number of users and issue a decision for enabling transmission means of the multicast data (BASEBAND TX PROCESSOR, $SF_1$,...,$SF_K$ SPREADER, QPSK MOD1,....,MODK, TX1,..., TXK, +) to address the transmission either on a common channel set up on shared resources ($SF_1$), in case the reporting threshold is surpassed, or on dedicated channels set up on individual resources ($SF_1$, $SF_2$, ...., $SF_K$) towards the reporting users in case the reporting threshold is not surpassed;

f) means of the base station (MULTICAST $P_{TDL}$ CALCULATOR) to calculate the transmission power of the multicast signal ($P_{TDL}$) on the basis of the reported quality measures ($SIR_{mobile}$) and the common/dedicated channel decision (p-t-p, p-t-m), in order to keep transmission power just above the quality threshold ($SIR_{THR}$);

g) means of the base station (BASEBAND TX PROCESSOR) to generate power control commands ($TPC1_{DL}$, ..., $TPCK_{DL}$) according to the calculated transmission power ($P_{TDL}$) to vary the gain of the power amplifier/s (TX1, TX2, ...., TXK) which feed either said common or dedicated channels.

17. The mobile radio system of the preceding claim, **characterised in that** the means recited at point a) are suitable to transmit a paging message with a discriminating parameter (X) usable by the comparison means (COMPARATOR) included in the mobile station (UE) for excluding from reporting the measured quality ($SIR_{mobile}$) to the base station.

18. The mobile radio system of claim 16 or 17, **characterised in that** the said means of the base station recited at step e) (COMPARATOR) receive two reporting threshold ($D_{THR1}$, $D_{THR2}$) during multicast data transmission, the greater one to be crossed for selecting transmission on common channel, while the lower one for selecting transmission on dedicated channels.

19. The mobile radio system of any claim from 16 to 18, **characterised in that** the physical resources that build up the common channel include sequential timeslots of repetitive frames and each timeslot being accessed by code division assigning one spread sequence ($SF_1$) to all the multicast users, while dedicated channels are accessed by assigning as many spread sequences ($SF_1$, $SF_2$, ...., $SF_K$) as the reporting users.

# UMTS NETWORK – MBMS SERVICE AREA

**FIG. 1**

EP 1 492 249 A1

# UMTS SYSTEM

**FIG. 2**

UE = ME + USIM

EP 1 492 249 A1

# POWER CONTROL MESSAGE SEQUENCE CHART

| UE | UTRAN | CN |
|---|---|---|

**1.** UE monitors BCH and checks for MBMS service announcement

UE joins the multicast group

context

**2.** MBMS data are available

**3.** Paging Message (TMGI)

**4.** Paging Message (TMGI, X, $SIR_{THR}$)

**5.** UE evaluates its SIR and decides whether or not to respond to the paging message

**6.** RRC connection (RACH/FACH) establishment for the responding UEs only

**7.** The responding UEs send their $SIRs_{mobile}$

## FIG. 3a

EP 1 492 249 A1

**UE**       **UTRAN**       **CN**

Possible iterative procedure
going back to step **4.**

**8.** UTRAN counts the
number of responses
and decides whether
to set up a ptm or ptp
transmission

**9.** Request for Dedicated RRC connections
only for the responding UEs

**10.** RRC connections (DCH/DCH establishment) for
closed loop power control for the responding UEs only

# FIG. 3b

EP 1 492 249 A1

| UE | | UTRAN | | CN |

**11.** UTRAN sets up the transmission power for the MBMS service delivery

**12.** MBMS data transmission on common/dedicated channel/s if the ptm/ptp option is set up

**13.** Step 5 (for MBMS data) and steps 11, 12 are repeated cyclically for closed loop power control, checking suitable conditions for refreshing the subset of reporting UEs

**14.** In case of refresh, goes to step **4.** confirming/modifying parameters X and/or $SIR_{THR}$ and repeats the cycle.

## FIG. 3c

# USER EQUIPMENT (simplified)

**FIG. 4**

EP 1 492 249 A1

# NODE B (simplified)

**FIG. 5**

## EUROPEAN SEARCH REPORT

**European Patent Office**

Application Number

EP 03 42 5411

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | FR 2 831 357 A (SAMSUNG ELECTRONICS CO LTD) 25 April 2003 (2003-04-25)<br>* abstract *<br>* page 4, line 9 - line 22 *<br>* page 4, line 30 - line 36 *<br>* page 5, line 9 - line 14 *<br>* page 10, line 11 - line 22 *<br>* page 16, line 3 - line 12 *<br>* page 16, line 24 - page 17, line 8 *<br>* page 20, line 13 - line 17 *<br>* page 30, line 3 - line 15 *<br>* page 30, line 27 - line 33 *<br>* page 31, line 7 - line 18 *<br>* page 31, line 35 - page 32, line 4 *<br>* page 44, line 12 - line 22 *<br>* page 45, line 21 - page 46, line 23 *<br>* page 49, line 11 - line 28 *<br>--- | 1-19 | H04B7/005<br>H04Q7/22 |
| A | WO 03 005603 A (GOTTSCHALK THOMAS ;BECKMANN MARK (DE); MARTIN HANS (DE); BAER SIEG) 16 January 2003 (2003-01-16)<br>* abstract *<br>* page 2, line 17 - line 25 *<br>* page 2, line 36 - page 3, line 27 *<br>* page 5, line 10 - line 23 *<br>----- | 1-19 | TECHNICAL FIELDS SEARCHED (Int.Cl.7)<br><br>H04B<br>H04Q |

The present search report has been drawn up for all claims

| Place of search | Date of completion of the search | Examiner |
|---|---|---|
| THE HAGUE | 17 November 2003 | Lustrini, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 03 42 5411

This annex lists the patent family members relating to the patent documents cited in the above-mentioned European search report.
The members are as contained in the European Patent Office EDP file on
The European Patent Office is in no way liable for these particulars which are merely given for the purpose of information.

17-11-2003

| Patent document cited in search report | | Publication date | Patent family member(s) | | Publication date |
|---|---|---|---|---|---|
| FR 2831357 | A | 25-04-2003 | CN | 1430363 A | 16-07-2003 |
| | | | DE | 10248988 A1 | 26-06-2003 |
| | | | FI | 20021863 A | 20-04-2003 |
| | | | FR | 2831357 A1 | 25-04-2003 |
| | | | GB | 2383501 A | 25-06-2003 |
| | | | JP | 2003188818 A | 04-07-2003 |
| | | | SE | 0203076 A | 20-04-2003 |
| | | | US | 2003119452 A1 | 26-06-2003 |
| WO 03005603 | A | 16-01-2003 | DE | 10132804 A1 | 30-01-2003 |
| | | | DE | 10149549 A1 | 10-04-2003 |
| | | | DE | 10158751 A1 | 12-06-2003 |
| | | | WO | 03005603 A1 | 16-01-2003 |

EPO FORM P0459

For more details about this annex : see Official Journal of the European Patent Office, No. 12/82